# EUROPEAN PATENT APPLICATION

(11) **EP 2 701 076 A1**
(43) Date of publication of application: **26.02.2014**
(21) Application number: 11863991.3
(22) Date of filing: 28.11.2011
(51) Int. Cl.: G06F 17/30, G06K 9/68, H04W 4/02

(54) **METHOD FOR COMMUNICATION WITH THE AIM OF SELECTIVE ACQUAINTANCE-MAKING**

(30) Priority: 18.04.2011 RU 2011115292
(71) Applicant: Serikov, Valerii Leonidovich, St.Petersburg 197375 (RU)
(72) Inventor: SERIKOVA, Irina Valerievna, St.Petersburg 197375 (RU); SERIKOV, Valerii Leonidovich, St. Petersburg, 197375 (RU)
(74) Representative: Gulde Hengelhaupt Ziebig & Schneider
(86) International application number: PCT/RU2011/000929
(87) International publication number: WO 2012/144928

(57) **Abstract**

The invention relates to the field of meeting life's requirements, and specifically to a method for making acquaintances, in particular acquaintances of the opposite sex, in the search for a companion for life or for a relationship. The method envisages information interchange between users wishing to become acquainted and having individual transceivers, with the individual characteristics of the users being stored in the memory of said transceivers. The acquaintance-making initiator transmits signals from said initiator's transceiver to the object of the acquaintance-making if said object of the acquaintance-making is determined by the acquaintance-making initiator. The object of the acquaintance-making receives a radio signal containing information relating to the individual characteristics of the acquaintance-making initiator and analyzes these characteristics. In the event that this information corresponds to the requirements of the object of the acquaintance-making, the latter transmits a response signal expressing agreement, whereupon the acquaintance-making initiator approaches the object of the acquaintance-making in order to make the acquaintance. The technical result consists in increasing the selectivity of acquaintance-making.

## Description

### Technical field

The invention relates to the field of meeting life's requirements, and specifically to a method for making acquaintances, in particular acquaintances of the opposite sex, in the search for a companion for life or for a relationship.

### Background art

Methods for making people acquainted by means of advertisements in newspapers or the Internet, as well as with the help of specialists in this area (match-makers) or dating services, are well-known.

The disadvantage of such methods consists in the fact that in the public opinion there is a fairly well-established notion of artificial nature and specifically negative emotional tone of such acquaintances, possible existence of a certain amount of calculation, including financial interest; newspaper and Internet advertisements, as well as questionnaires filled out in dating services, provide not only a more or less accurate reflection of the attributes related to physical and personal characteristics of the acquaintance-making initiator and the object of the desired acquaintance-making, but also usually contains information or preferences regarding the professional, social and family status, well-being, housing conditions, etc. In addition, with such methods of acquaintance-making, publishing an anonymous advertisement or filling out an anonymous questionnaire at a dating service does not guarantee complete confidentiality, since an accidental or deliberate data leakage is possible.

A well-known natural method of selective acquaintance-making can take place, for example, in places of entertainment, in the street, in public transport etc., when the acquaintance-making initiator directly addresses the object of acquaintance-making and directly or indirectly communicates his/her desire to make an acquaintance. This method has maximum selectivity, however serious disadvantages of this relatively wide-spread method consist in the notion of unethical nature of "accidental" acquaintance, especially in the street and some other public places, which is shared by many people, as well as the shyness and other individual psychological peculiarities of individuals.

Another known method for communication with the aim of selective acquaintance-making comprises using personal transceivers, which are made to permit wireless communication therebetween by means of a local control device, and a central control device. Data on individuals wishing to make an acquaintance are entered into the central control device in the form of a written application, or into the central control device by phones through the local control device, or are entered directly into the computer of the central control device. The data can include parameters of criteria for making the acquaintance, e.g. ethnic origin, religious affiliation, education, income, age, height, weight, habits, interests, lifestyle, hobbies, and preferable characteristics of an object of a potential acquaintance-making, see US 5086394 A.

After making contact by means of abovementioned devices, phone calls or meetings in person can be initiated, voice messages can be left etc.

The disadvantage of this method consists in constant load of the local control station with a large number of phone calls, the necessity to handle the transfer of large volume of informational data from the central control station to the local control station; in addition, the acquaintance is initiated solely on the basis of information provided by the participants of the method, with no visual contact. People often provide inaccurate information about themselves, usually by deliberately lowering their age or inadvertently subjectively overestimating their external appearance.

Another known method for communication with the aim of selective acquaintance-making comprises sending and receiving radio signals from portable transceivers containing a means of indication, which are carried by individuals wishing to make an acquaintance, wherein the information about individual characteristics of the person owning the transceiver is preliminary entered into the memory of each transceiver, see RU 2164055 C2. During implementation of the method individual characteristics of individuals are checked, which are independently specified by individuals wishing to make an acquaintance and consist of characteristics of corresponding person and a set of reference characteristics, including checking the characteristics of this person against the set of reference characteristics defined by another person, and checking the characteristics of the other person against the set of reference characteristics defined by this person, and if there is a mutual match of individual characteristics of the individuals, making a selective acquaintance; mutual checking of individual characteristics of individuals wishing to make a selective acquaintance is done by means of a portable device, which is carried by each individual wishing to make an acquaintance and is used for remote exchange of information about individual characteristics of individuals with other devices through the surrounding media by means of electromagnetic waves, by maintaining communication therebetween in a small space to avoid making it difficult to identify the person owning the device, wherein the owners of all devices preliminary enter into the memory of the device the information about individual characteristics of individuals, as well as reference information containing identification features, and if a mutual match of individual characteristics of individuals occurs, the devices generate mutual alert signals and use the means of indication (display panel of the device) to show reference information, which is perceived by owners of the devices, whereupon they identify one another and make a selective acquaintance.

This method has been taken as a prototype of the present inventive technical solution.

The disadvantage of said method, similar to the abovementioned analogous method, consists in the fact that the object of the acquaintance-making is not selected by the acquaintance-making initiator in a conscious manner, relying on his/her visual impression, rather it is selected by apparatuses that perform mechanical processing and matching of information prestored in the instruments' memory, which reflects a multitude of characteristics. Yet even an immensely large amount of formal characteristics cannot replace the personal experience, "an emotional burst", let alone the phenomenon that is called "love at first sight" in Russia, and "a stroke of lightning" in Italy and France, because the "first sight", the first sensuous impression and direct communication in the prototype method is preceded by interaction and selection of inanimate devices.

Consequently, even if all formal characteristics match the requirements of the parties, said parties can dislike each other upon face-to-face meeting, resulting in an awkward situation difficult to escape from and unpleasant to both parties. It is also worth noting the disappointment effect due to excessive expectations, which is practically always present during indirect acquaintance. People are prone to picture an image of the object of future acquaintance-making, which is usually willingly or unwillingly romanticized, however this imaginary portrayal naturally cannot coincide with the real image seen upon visual contact. This mismatch, even if the real image is objectively not worse than the imagined portrayal, inevitably creates a certain psychological frustration: "This is not what I expected". Another important issue is that the object of acquaintance-making will be aware of the fact that he/she was chosen not by the individual in question, but by an instrument, the acquaintance is not due to his/hers personal charm, but to a match of formal characteristics of the parties stored in memory of the instruments; thus, the disadvantage of the prototype method also consists in the lack of emotional and psychological satisfaction of knowing that someone found this person attractive, that he/she made the choice to become acquainted because said person is unique and special due to some of its individual qualities that probably cannot be formalized as a set of characteristics and that are evaluated upon visual contact.

Another disadvantage of the prototype method consists in that after the instruments determine that the formal characteristics of the parties match, establishment of personal visual contact is preceded by additional remote communications - over the phone, the Internet etc., using corresponding reference information shown on the display panel of the device. This complicates and encumbers the method of communication.

### Summary of the invention

It is an object of the present invention to increase selectivity, naturalness and effectiveness, and also to simplify the method for communication with the aim of acquaintance-making.

According to the invention, there is provided a method for communication with the aim of selective acquaintance-making, which comprises sending and receiving radio signals from portable transceivers containing a means of indication, which are carried by individuals wishing to become acquainted, wherein the information about individual characteristics of the person owning the transceiver is preliminary entered into the memory of each transceiver, and the individuals carrying transceivers are provided with visually distinctive markers, and wherein an acquaintance-making initiator visually detects an object of acquaintance-making and determines the presence or absence of a marker at the other person, if the object of acquaintance-making has a marker, the acquaintance-making initiator sends a radio signal containing information about his/her individual characteristics, the object of acquaintance-making then receives the signal and examines the information about individual characteristics of the acquaintance-making initiator, and if this information matches the requirements of the object of acquaintance-making, the latter sends a response signal, expressing consent to communicate, whereupon the acquaintance-making initiator approaches the object of acquaintance-making in order to communicate with the aim of acquaintance-making; the object of acquaintance-making can visually identify the acquaintance-making initiator prior to sending a signal expressing consent to acquaintance-making.

The applicant has not found any sources of information containing data on technical solutions identical to the present invention, which enables to conclude that the invention conforms to the criterion "Novelty" (N).

Implementation of the features of the invention provides the inventive method of communication with new properties.

First of all, the selectivity of communication is increased virtually to the level of a natural direct acquaintance-making, since the acquaintance-making initiator can previously see and visually assess the object of acquaintance-making, and the object of acquaintance-making can do the same prior to sending a signal expressing consent to communicate.

In the implementation of the inventive method the object of acquaintance-making is prevented from having negative emotions common to the prototype method, which are caused by knowing that he/she was selected by an apparatus due to formal characteristics and not by the other individual. On the contrary, in the implementation of the inventive method the object of acquaintance-making may be pleased to know that another individual likes them. The acquaintance-making initiator may also have positive emotions upon receiving a signal with consent to acquaintance-making. This circumstance to a significant extent ensures a natural feel of the relationship during implementation of the inventive method for communication, and even if the response signal was not sent and no acquaintance-making was made, there will be no awkward situation that can arise during implementation of the prototype method when one or both sides feel disappointed upon visual contact. In the inventive method not only the acquaintance-making initiator but the other party too may preliminary see and visually assess one another without engaging in verbal contact. In addition, since all participants of this method for communication mark their readiness to communicate beforehand by purchasing and demonstrating corresponding specific visually distinctive markers, it eliminates many negative ethical and psychological aspects that can arise during accidental acquaintance-makings if the object of such acquaintance-making is very unwilling to make the acquaintance.

The applicant has not found any sources of information containing data on the influence of the features of the invention on the technical result produced by the invention. In applicant's opinion, the abovementioned new properties of the invention enable to conclude that the invention conforms to the criterion "Inventive Step" (IS).

### Brief description of the drawings

The invention is further explained, by way of detailed description of examples of its embodiments, without reference to any drawings.

### Preferred embodiment

The inventive method is implemented in the following way.

Individuals wishing to communicate with the aim of acquaintance-making purchase from their provider portable radio signal transceivers that operate in an unlicensed radio frequency range and have low power. The radio transmitter has a means of indication in the form of a display, and a source of an audio signal. In addition, individuals purchase from their provider visually distinctive and clearly seen markers, for example, some specific clothing items, head wear, badges etc., and position the markers so that the participants of this group of individuals could see the markers from a specific distance, e.g. up to 50 m. Only the participants of the group are informed about the meaning of these markers. Radio signal transceivers within a particular group of individuals operate at the same frequency and in their essence are analogous to a complex of a remote control of a household electronic apparatus and a receiver of signals coming from said remote control. The transceiver comprises memory elements, where information about individual characteristics of the individual owning the transceiver is preliminary entered. Thanks to the ability to make an initial one- or two-sided visual contact, this method allows discarding a large number of characteristics defining the appearance of a person and use just a minimum of several main characteristics that are required for communicating with the aim of acquaintance-making, for example, sex and age.

The person that initiates the acquaintance-making visually detects an object of planned acquaintance-making and determines the presence or absence of corresponding distinctive marker upon said person. If the marker is present, the acquaintance-making initiator sends a radio signal containing information on his/her individual characteristics, in this example the sex and age. The object of acquaintance-making receives said signal and examines the information about individual characteristics of the acquaintance-making initiator, which is shown on the display of the means of indication, e.g. a liquid crystal display. If this information matches the requirements of the object of acquaintance-making, the latter can immediately send a response signal, expressing consent to communication, or can look around prior to sending the signal in order to visually identify the acquaintance-making initiator and assess his/hers appearance. After receiving a response signal from the object of acquaintance-making, the acquaintance-making initiator can approach the visually chosen object of acquaintance-making and interact with him/her. If the object of acquaintance-making visually identifies the acquaintance-making initiator and agrees to communicate, he/she can approach the acquaintance-making initiator, too. If the object of the acquaintance-making visually identifies several individuals with distinctive markers, he/she can try to determine which one of them sent the signal to initiate acquaintance-making by observing their behaviour, e.g. whether said person is currently holding the apparatus, their facial expression etc. The probability of two or more nearby individuals sending signals and being identified is quite small, but even in this scenario a conversation with one of them is possible; for this the object of acquaintance-making can come closer to the more attractive sender of the signal and express the consent to communicate by sending a response radio signal or by directly addressing the sender.

The inventive method is more effective and promising, because direct communication starts only after both sides visually like each other, or if the object of acquaintance-making seems attractive to the acquaintance-making initiator and sends a signal expressing consent to communication.

It should be noted that the inventive method is significantly simpler than the prototype method, since it eliminates the need to keep records and formalize a multitude of characteristics of external appearance and anthropometric data. In addition, it eliminates the need to rank the characteristics, which would be necessary in case of a large number of characteristics, since it is virtually impossible for all characteristics to match. The function of the provider in the implementation of this method can be reduced to just selling and providing technical support of equipment, whereas in the implementation of the prototype method it is inevitably necessary to compose quite complicated computer programs that take into account a multitude of characteristics and their relative significance, and perform a comparative analysis in order to determine the extent of matching.

### Industrial applicability

The method can be implemented by means of much simpler equipment, which is manufactured by means of known element base and equipment. In applicant's opinion, this enables to conclude that the invention conforms to the criterion "Industrial Applicability" (IA).

## Claims

1. A method for communication with the aim of selective acquaintance-making, which comprises sending and receiving radio signals from portable transceivers containing a means of indication, which are carried by individuals wishing to become acquainted, wherein the information about individual characteristics of the person owning the transceiver is preliminary entered into the memory of each transceiver, **characterized in that** t the individuals carrying transceivers are provided with visually distinctive markers, an individual that initiates the acquaintance-making visually detects an object of acquaintance-making and determines the presence or absence of a marker at the other person, if the object of acquaintance-making has a marker, the acquaintance-making initiator sends a radio signal containing information about his/her individual characteristics, the object of the acquaintance-making then receives the signal and examines the information about individual characteristics of the acquaintance-making initiator, if this information matches the requirements of the object of the acquaintance-making, the latter sends a response signal, expressing consent to communicate, whereupon the acquaintance-making initiator approaches the object of acquaintance-making in order to communicate with the aim of acquaintance-making.

2. A method as claimed in claim 1, **characterized in that** the object of acquaintance-making can visually identify the acquaintance-making initiator prior to sending a signal expressing consent to acquaintance-making.
